Europäisches Patentamt

European Patent Office

Office européen des brevets

(11) Veröffentlichungsnummer: **0 317 747**

**A2**

# (12) EUROPÄISCHE PATENTANMELDUNG

(21) Anmeldenummer: 88116601.1

(22) Anmeldetag: 07.10.88

(51) Int. Cl.⁴: **B26D 1/62 , B26D 1/28**

(30) Priorität: 27.11.87 DE 3740308

(43) Veröffentlichungstag der Anmeldung:
31.05.89 Patentblatt 89/22

(84) Benannte Vertragsstaaten:
FR GB IT SE

(71) Anmelder: BÖWE Informations- und
Systemtechnic GmbH
Haunstetter Strasse 112
D-8900 Augsburg(DE)

(72) Erfinder: Wanner, Rudolf
Langemantelstrasse 8
D-8901 Aystetten(DE)
Erfinder: Eckl, Robert
Zeppelinstrasse 34
D-8900 Augsburg(DE)

(54) **Vorrichtung zum Zertrennen eines endlosen Streifens aus Papier oder dergleichen.**

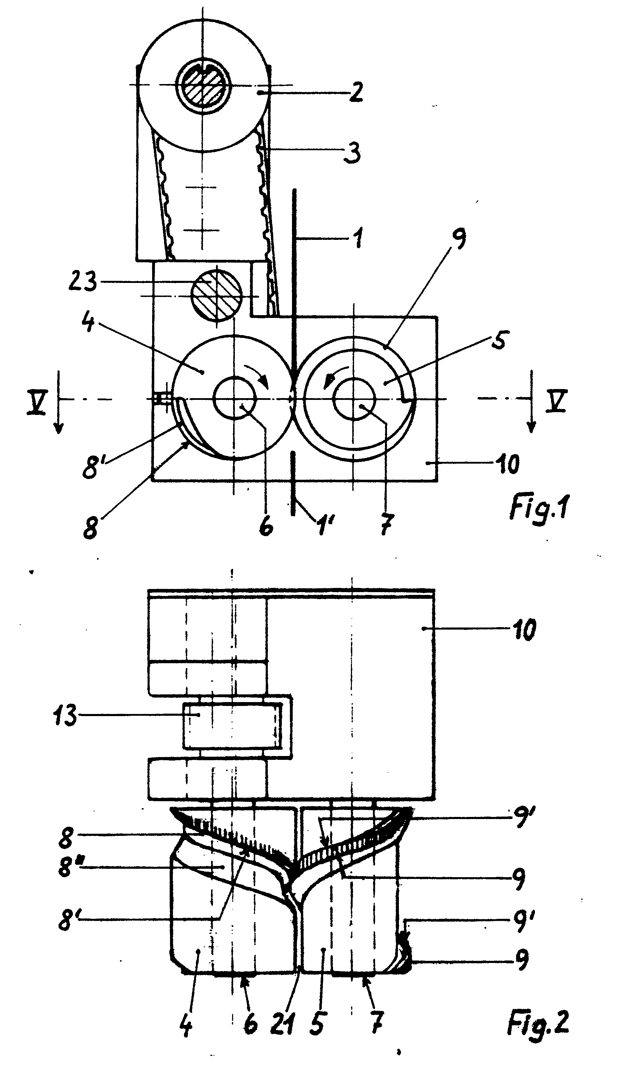

(57) Die Erfindung betrifft eine Vorrichtung zum Trennen eines endlosen Streifens aus Papier oder dergleichen durch einen Schnitt mit zwei relativ zueinander bewegten Messern, zwischen denen der Streifen hindurchführbar ist. Um eine einfache und platzsparende Vorrichtung zum Zerkleinern eines solchen, beispielsweise von einer Endlosbahn in einem Reißer abgetrennten Streifens zu erhalten, sieht die Erfindung vor, daß das eine Messer (8) die Form einer rechtsgängigen und das andere Messer (9) die Form einer linkgsgängigen Schraubenlinie gleicher Steigung aufweist, wobei die Messer (8, 9) um zwe zueinander parallele Achsen (6, 7) gegensinnig rotierbar und mit gleicher Umfangsgeschwindigkeit antreibbar, beispielsweise auf je einer Walze (4, 5), angeordnet sind und sich an mindestens einer Stelle (16) des Umfangs ständig mit ihren einander zugewandten Schneidflächen (8′, 9′) berühren (Fig. 2).

Fig.2

## Vorrichtung zum Zertrennen eines endlosen Streifens aus Papier oder dergleichen.

Die Erfindung betrifft eine Vorrichtung zum Zertrennen eines endlosen Streifens aus Papier oder dergleichen durch einen Schnitt mit zwei relativ zueinander bewegten Messern, zwischen denen der Streifen hindurchführbar ist.

Derartige endlose Streifen werden beispielsweise beim Schneiden oder Reißen von Endlosformular von einer Endlosbahn abgetrennt (z.B. DE-PS 1561707) und müssen dann in kurze Stücke zerkleinert werden. Bei Schneidemaschinen wird der Streifen zusammen mit dem Formular zerschnitten (DE-PS 1561707). Bei Reißern wird der endlose Streifen beispielsweise über eine sägezahnartige Kante geführt und durch ein nachfolgendes Rollenpaar an der geschwächten Stelle abgerissen. Derartige bekannte Vorrichtungen benötigen nicht nur entsprechend viel Platz. Wenn nicht spezielle Reißlinien im Streifen vorgesehen sind, ist auch die Rißstelle des Streifens nicht genau definiert.

Der Erfindung liegt die Aufgabe zugrunde, eine zuverlässig arbeitende Vorrichtung mit geringem Platzbedarf zum Zerkleinern der vom Rand einer Endlosbahn oder dergleichen abgetrennten Streifen zu schaffen.

Erfindungsgemäß wird diese Aufgabe durch die in Anspruch 1 angegebene Merkmalskombination gelöst. Die beiden Messer, zumindest aber ihre Schneidflächen und -kanten haben also die Form von gegensinnig rotierenden rechts- und linksgängigen Schraubenlinien, die sich, natürlich mit gleicher Steigung, an mindestens einer Stelle ihres Umfangs (ggf. auch an mehreren Stellen, die auf einer achsparallelen Mantellinie einer die Messer umgebenden Zylinderfläche liegen) mit ihren Schneidflächen zumindest im Kantenbereich berühren, ähnlich wie das auch bei runden, scheibenförmigen Messern bekannt ist. Durch die Rotation werden die Messer aneinander vorbeibewegt, und es entsteht ein schräger Schnitt in dem Streifen, wenn er in Richtung quer zur Richtung der Rotationsachsen zwischen den schraubenlinienförmigen Schneidkanten der Messer hindurchgeführt wird.

Die Anordnung der beiden Messer im Raum erfolgt am einfachsten, wie in Anspruch 2 angegeben, auf je einer Walze. Vorteilhafterweise werden die Messer auf den Walzen gemäß Anspruch 3 angeordnet, sodaß das erhaben ausgebildete Messer, wie im folgenden noch ersichtlich, mit seiner äußeren Schneidkante in die für die Ausbildung des Messers vorgesehene Ausnehmung auf der anderen Walze eingreift. Diese Anordnung ermöglicht weiterhin auch die Ausbildung der Messer und Walzen gemäß Anspruch 4. Hierdurch wird verhindert, daß der Streifen beim Durchgang zwischen den Messern sich in unerwünschter Weise verdreht.

Zur besseren Führung des Streifens beim Durchgang durch die Messer und zwischen den Walzen dient auch die Anordnung eines Reibbelags gemäß Anspruch 5. Der Belag sollte weich sein, etwa pelz- oder fellartige Beschaffenheit aufweisen, um den Streifen zu führen ohne ihn übermässig anzuspannen oder gar ihn zu zerreißen. Eine leichte, der Führung des Streifens dienliche Spannung kann erfindungsgemäß durch eine etwas höhere Umfangsgeschwindigkeit der Messer, wie in Anspruch 6 angegeben, erreicht werden. Diese Erhöhung der Umfangsgeschwindigkeit, die unschwer aus der Geschwinigkeit des Papiervorschubs der Maschine abgeleitet werden kann, soll nur geringfügig sein, um den Streifen leicht zu straffen und eine eventuelle Stauchung auszuschließen. Grundsätzlich sind Umfangsgeschwindigkeit und Streifenvorschubgeschwindigkeit ungefähr gleich groß. Das ständige Aneinanderliegen der Messer mit ihren Schneidflächen und -kanten wird durch die Anordnung gemäß Anspruch 7 erreicht, beispielsweise mit Hilfe einer Feder.

Grundsätzlich ist die Streifenbreite durch die Walzenlänge bzw. die Länge der Messerschraube begrenzt. Bei mehreren Windungen der Messer sind mehrere parallel durch den Streifen verlaufende Schrägschnitte an den Berührungsstellen möglich.

Die Erfindung ist in der Zeichnung beispielsweise und schematisch dargestellt. Es zeigen:

Fig. 1: Eine Vorderansicht einer Streifenschneidevorrichtung mit zwei Messerwalzen,

Fig. 2: eine Draufsicht auf die Walzenanordnung gemäß Fig. 1,

Fig. 3: eine Seitenansicht der Vorrichtung gemäß Fig. 1,

Fig. 4: ein abgeschnittenes Streifenstück und

Fig. 5: einen Schnitt entlang der Linie V -V in Fig. 1.

Wie aus Fig. 1 ersichtlich, wird der Streifen 1, z.B. bei einem an sich bekannten Reißer, von oben nach unten in den Zwickel zwischen den beiden um parallele horizontale Achsen gegensinnig rotierenden Walzen 4 und 5 eingeführt. Die Walzen 4 und 5 sind jeweils auf Wellen 6 und 7 drehstarr angeordnet und werden gemäß Pfeilrichtung (Fig. 1) von einem Antriebsrad 2 über einen Treibriemen 3 angetrieben. Der Antrieb für die beiden Walzen befindet sich in einem Gehäuse 10, das an einem stabförmigen Träger 23 befestigt ist.

Auf der Oberfläche der Walze 5 ist ein Messer 9 in Form einer rechtsgängigen Schraubenlinie angeordnet. In die Oberfläche der Walze 4 ist ein Messer 8 in Form einer linksgängigen Schraubenlinie gleicher Steigung eingelassen. Das Messer 9 ist auf der Walze 5 so angeordnet, daß seine Schneidfläche 9' unmittelbar außen an der Messerschneidkante zu dem Gehäuse 10 hingewandt ist, also auf der dem Gehäuse 10 zugewandten Seite des Messers 9 liegt. Bei dem Messer 8 ist die Schneidfläche 8' in Richtung vom Gehäuse 10 weg nach außen zum freien Walzenende hingewandt, sodaß die beiden Messer bei gegensinniger Rotation der Walzen an mindestens einer Stelle ihres Umfangs mit ihren äußeren Schneidflächen ständig aneinanderliegend angetrieben und in axialer Richtung gegeneinander angedrückt werden können.

Das auf der Walze 5 angeordnete, schraubenlinienförmige Messer 9 ist erhaben ausgebildet, das schraubenlinienförmige Messer 8 ist in die zylindrische Oberfläche der Walze 4 eingeschnitten, sodaß sich eine schneckenförmige oder gewindeartige Ausnehmung mit der Schrägfläche 8'' ergibt, in die das Messer 9 auf der Walze 5 eindringen kann.

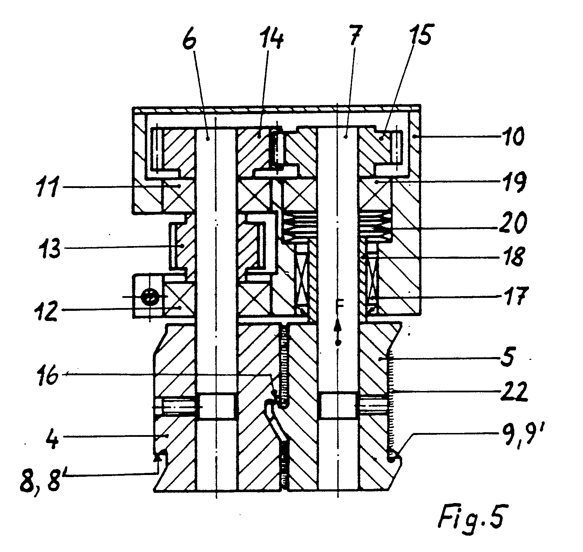

Wie insbesondere aus dem Schnitt gemäß Fig. 5 ersichtlich, ist bei dem dargestellten Ausführungsbeispiel die Walze 4 auf der Welle 6 festgespannt. Die Welle 6 ist in den Lagern 11 und 12 im Antriebsgehäuse 10 gehalten und geführt. Mit der Welle 8 ist eine Riemenscheibe 13 drehstarr verbunden, über die die Welle mittels des Treibriemens 3 in der in Fig. 1 angegebenen Richtung angetrieben wird.

Der Antrieb der auf der Welle 7 festgespannten Walze 5 erfolgt über die Zahnräder 14 und 15. Diese beiden Zahnräder sind so bemessen, daß das auf der Walze 5 befindliche Messer 9, das mit seiner Schneidefläche 9' zumindest im Bereich seiner Schneidkanten an einer Stelle 16 seines Umfangs an der Schneidfläche 8' des anderen Messers 8 auf der Walze 4 ständig anliegt, an dieser Stelle 16 gleiche Umfangsgeschwin-digkeit aufweist wie das Messer 8. Die Lagerung der Welle 7 erfolgt durch das Nadellager 17, in dem eine auf der Welle 7 fest aufgezogene Hülse 18 rotiert, und durch das Kugellager 19. Durch eine Druckfeder 20, die sich an einem Ansatz im Gehäuse 10 abstützt, wird der im Gehäuse 10 schwimmend gelagerte Außenring des Lagers 19 und damit die Welle 7 in Richtung des Pfeils F gedrückt, wodurch die Walze 5 ständig mit ihrem Messer 9 gegen das Messer 8 auf der Walze 4 bzw. gegen dessen Schneidfläche 8' an der Stelle 16 und des Umfangs federnd angedrückt wird, sodaß beide Messer 8 und 9 dort sich ständig mit ihren einander zugewandten Schneidflächen bzw. Schneidkanten berühren.

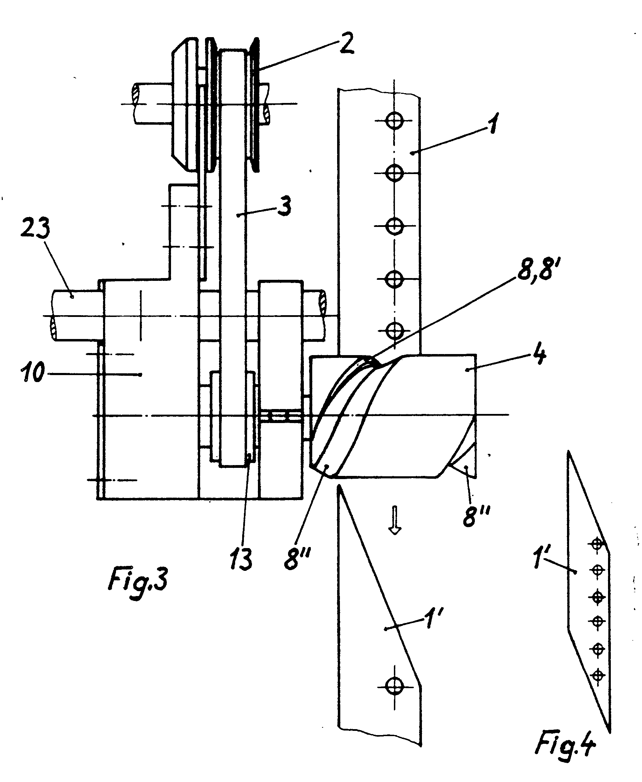

Die zylindrische Oberfläche der beiden auf den Wellen 6 und 7 angeordneten Walzen 4 und 5 haben zwischen sich nur einen geringen Abstand, sodaß ein schmaler Spalt 21 zwischen ihnen entsteht, der eine Führung für den zwischen den Messern 8 und 9 hindurchgeführten Streifen 1 an beiden Seiten der Schnittstelle 16 bildet. Zur weiteren Führung und besseren Mitnahme des Streifens 1 ist auf der Oberfläche der Walze 5 noch ein fellartiger Belag 22 vorgesehen. Der von oben zwischen die Walzen 4 und 5 eingeführte Streifen 1 wird dann durch die beiden rotierenden Messer 8 und 9 durch schräge Schnitte in kleine, nach unten herunterfallende Stücke 1' zerschnitten (Fig. 3 und 4).

Durch die erfindungsgemäße Vorrichtung wird eine sichere und zuverlässige Zerkleinerung des abgetrennten Randstreifens gewährleistet. Insbesondere eignet sie sich problemlos zum Zerschneiden von mehreren, übereinanderliegenden Streifen, so daß auch Mehrfachformularsätze verarbeitet werden können.

## Ansprüche

1. Vorrichtung zum Zertrennen eines endlosen Streifens aus Papier oder dergleichen, durch einen Schnitt mit zwei relativ zueinander bewegten Messern, zwischen denen der Streifen hindurchführbar ist, dadurch gekennzeichnet, daß das eine Messer (8) die Form einer rechtsgängigen und das andere Messer (9) die Form einer linksgängigen Schraubenlinie gleicher Steigung aufweist, daß die Messer (8, 9) um zwei zueinander parallele Achsen (6, 7) gegensinnig rotierbar und mit ungefähr gleicher Umfangsgeschwindigkeit antreibbar angeordnet sind und sich an mindestens einer Stelle (16) ihres Umfangs ständig mit ihren einander zugewandten Schneidflächen 8', 9' berühren.

2. Vorrichtung nach Anspruch 1, dadurch gekennzeichnet, daß die Messer (8, 9) auf der zylindrischen Oberfläche je einer von zwei um parallele Achsen (6, 7) gegensinnig rotierbar gelagerten Walzen (4, 5) angeordnet sind.

3. Vorrichtung nach Anspruch 2, dadurch gekennzeichnet, daß das eine Messer (9) auf der Oberfläche der einen Walze (5) erhaben und das andere Messer (8) entsprechend in die Oberfläche der oberen Walze (4) versenkt ausgebildet ist.

4. Vorrichtung nach Anspruch 2 oder 3, dadurch gekennzeichnet, daß die zylindrischen Oberflächen der Walzen (4, 5) einen geringen Abstand voneinander aufweisen.

5. Vorrichtung nach Anspruch 4, dadurch gekennzeichnet, daß mindestens eine der Walzen (4, 5) auf ihrer zylindrischen Oberfläche einen Reibbelag (22) oder dergleichen aufweist.

6. Vorrichtung nach Anspruch 1 oder einem der folgenden, dadurch gekennzeichnet, daß die Umfangsgeschwindigkeit der Messer (8, 9) geringfügig höher ist als die vorschubgeschwindigkeit des Streifens (1).

7. Vorrichtung nach anspruch 1 oder einem der folgenden, dadurch gekennzeichnet, daß das eine Messer (9) mit seiner Schneidfläche 9' durch eine axiale Kraft (20) gegen die Schneidfläche (8') des anderen Messers (8) andrückbar ist.

Fig.1

Fig.2

Fig.3

Fig.4

Fig.5